# FASCICULE DE BREVET EUROPEEN

(11) **EP 4 092 290 B1**
(45) Date de publication et mention de la délivrance du brevet: **27.03.2024**
(21) Numéro de dépôt: 22173635.8
(22) Date de dépôt: 16.05.2022
(51) Int. Cl.: F16F 15/14

(54) **DISPOSITIF D AMORTISSEMENT PENDULAIRE**
PENDELDÄMPFUNGSGERÄT
PENDULUM DAMPING DEVICE

(30) Priorité: 17.05.2021 FR 2105111
(43) Date de publication de la demande: 23.11.2022
(73) Titulaire: VALEO EMBRAYAGES, 80009 Amiens (FR)
(72) Inventeur: MALLEY, Matthieu, 80009 Amiens (FR); NERRIERE, Adrien, 80009 Amiens (FR); VERHOOG, Roël, 80009 AMIENS (FR)
(74) Mandataire: Valeo Powertrain Systems

(56) Documents cités:
- DE-A1-102018 123 742
- FR-A1- 3 010 467
- FR-A1- 3 079 010

## Description

La présente invention se rapporte à un dispositif d'amortissement pendulaire, notamment pour un embrayage d'un système de transmission de véhicule.

Un dispositif d'amortissement pendulaire est classiquement utilisé pour filtrer les vibrations dues aux acyclismes du moteur d'un véhicule. En effet, dans le cas des moteurs thermiques, les mouvements des cylindres d'un moteur à explosion génèrent des acyclismes qui varient notamment en fonction du nombre de cylindres. Ces acyclismes sont susceptibles de générer à leur tour des vibrations qui peuvent passer dans la boîte de vitesses et y provoquer des chocs et des nuisances sonores indésirables. Il est donc préférable de prévoir un dispositif de filtration des vibrations.

Un tel dispositif d'amortissement pendulaire peut également être utilisé pour des moteurs hybrides.

Le dispositif d'amortissement pendulaire est classiquement fixé rigidement, au moyen de rivets, à une rondelle de phasage d'un dispositif d'amortissement de torsion, en particulier à un embrayage, un volant solidaire d'un vilebrequin, un convertisseur de couple hydrodynamique ou un double embrayage à sec ou humide. Un tel dispositif d'amortissement de torsion est par exemple connu sous le nom de double volant amortisseur.

En variante, dans une telle application, le dispositif d'amortissement peut être intégré à un disque de friction de l'embrayage.

Classiquement, le dispositif d'amortissement pendulaire comporte un support annulaire destiné à être entraîné en rotation et plusieurs corps pendulaires, montés oscillants sur le support autour d'un axe parallèle à l'axe de rotation du support. Le déplacement d'un corps pendulaire par rapport au support est généralement guidé par deux organes de roulement coopérant chacun avec une piste de roulement du support et une piste de roulement de corps pendulaire. Les pistes de roulement du support et de corps pendulaire s'étendent de manière à ce qu'en service les organes de roulement soient en appui centrifuge et centripète, respectivement, sur lesdites pistes.

Un corps pendulaire est classiquement constitué par une paire de masses oscillantes, prenant en sandwich le support et rigidement solidaires entre elles, généralement par l'intermédiaire d'un organe de liaison. Les masses oscillantes peuvent être rivetées sur l'organe de liaison.

Le corps pendulaire d'un tel dispositif d'amortissement pendulaire subit des chocs importants lorsqu'il sature, principalement lors des phases de démarrage du moteur. La saturation se produit lorsqu'un corps pendulaire se déplace tangentiellement au maximum de sa capacité. Les phases de saturation du corps pendulaire se produisent lorsque le corps pendulaire se situe sur la fin de ses traces de déplacement.

Lors de ces chocs, un contact métallique entre le corps pendulaire et le support se fait au niveau de l'organe de liaison sollicitant fortement ledit organe de liaison. Cette sollicitation fragilise fortement ce dernier entrainant un risque accéléré de détérioration du dispositif d'amortissement pendulaire et de diminution de ses capacités de filtration. Il existe donc un besoin de renforcer la tenue mécanique dudit dispositif d'amortissement pendulaire sans en augmenter le prix.

Le document FR3010467, considéré comme l'art antérieur le plus proche, décrit ainsi toutes les caractéristiques techniques du préambule de la revendication 1.

A cet effet, l'invention propose un dispositif d'amortissement pendulaire destiné à être intégré dans une chaîne de transmission d'un véhicule, notamment dans un embrayage, comprenant :
un support mobile en rotation autour d'un axe de rotation, et dans lequel une fenêtre définissant deux pistes de roulement de support est ménagée,
un corps pendulaire comprenant : deux masses oscillantes, et un unique organe de liaison appariant entre elles les deux masses oscillantes et définissant deux pistes de roulement de corps pendulaire,
un premier et un deuxième organes de roulement définissant chacun une surface de roulement adaptée pour rouler sur l'une, respectivement l'autre, des deux pistes de roulement de support et de corps pendulaire, de manière à guider une oscillation du corps pendulaire par rapport au support, le premier et le deuxième organes de roulement roulant le long de chaque piste de roulement autour d'une position de repos sur ladite piste,
dans lequel l'unique organe de liaison s'étend circonférentiellement entre une première extrémité et une deuxième extrémité et comprend une première zone, s'étendant circonférentiellement entre la première extrémité et la position de repos du premier organe de roulement, une deuxième zone, s'étendant circonférentiellement entre la position de repos du deuxième organe de roulement et la deuxième extrémité, et une troisième zone, s'étendant circonférentiellement entre la première zone et la deuxième zone,
caractérisé en ce que l'unique organe de liaison est riveté, la première zone et la deuxième zone comprenant chacune N premier rivet présentant chacun un premier diamètre, N étant un entier naturel non nul, et la troisième zone comprenant R deuxième rivet présentant chacun un deuxième diamètre, R étant un entier naturel,
et en ce que la somme des premiers diamètres des N premier rivet de la première zone ou de la deuxième zone est strictement supérieur à la somme des deuxièmes diamètres des R deuxième rivet de la troisième zone.

Le positionnement et le choix des rivets est ainsi optimisé sur l'organe de liaison. Les rivets sont plus nombreux et/ou plus résistant sur les zones de l'organe de liaison qui sont les plus sollicitées lors de la saturation du corps pendulaire. La tenue mécanique du dispositif d'amortissement pendulaire est renforcée, et donc d'en augmenter la durée de vie.

Le corps pendulaire présente une position de repos, et dans cette position de repos du corps pendulaire, chacun des organes de roulement est au contact de la position de repos sur chaque piste de roulement avec lesquelles il coopère.

N est le nombre de premier rivet présent sur la première zone et sur la deuxième zone de l'unique organe de liaison. N est un entier naturel non nul, c'est-à-dire que N est différent de zéro.

R est le nombre de deuxième rivet présent sur la troisième zone de l'unique organe de liaison. R est un entier naturel, c'est-à-dire que R peut être égal à zéro.

L'unique organe de liaison est riveté aux deux masses oscillantes du corps pendulaire.

Un dispositif selon l'invention peut encore comporter une ou plusieurs des caractéristiques optionnelles suivantes :
N est strictement supérieur à R ; Ainsi, les rivets présents sur les zones de l'organe de liaison qui sont les plus sollicitées lors de la saturation du corps pendulaire sont plus nombreux ce qui permet de renforcer la tenue mécanique du dispositif d'amortissement pendulaire ;
N est égal à deux et R est égal à zéro ; Ainsi, les coûts de fabrication et le temps de montage sont réduits ;
N est égal à deux et R est égal à un ; ainsi, la tenue mécanique est renforcée ;
N est identique à R ; Ainsi, le choix de rivets adaptés permet de répartir uniformément les rivets sur l'organe de liaison ;
Le premier diamètre de chacun des N premier rivet de la première zone et de la deuxième zone de l'unique organe de liaison est identique au deuxième diamètre de chacun des R deuxième rivet de la troisième zone de l'unique organe de liaison ; Ainsi, tous les rivets sont identiques ce qui réduit le nombre de pièce nécessaire et donc les coûts et les risques d'erreurs lors du montage ;
Le premier diamètre de chacun des N premier rivet de la première zone et de la deuxième zone de l'unique organe de liaison est strictement supérieur au deuxième diamètre de chacun des R deuxième rivet de la troisième zone de l'unique organe de liaison ; Ainsi, il est possible de réduire le nombre de rivets présents sur le corps pendulaire sans réduire la tenue mécanique de ce dernier ;
Chacune des deux piste de roulement de corps pendulaire de l'unique organe de liaison s'étend entre une première extrémité angulaire et une deuxième extrémité angulaire, la distance circonférentielle entre la première extrémité et la deuxième extrémité de l'unique organe de liaison étant plus de trois fois supérieur à la distance circonférentielle entre la deuxième extrémité angulaire de l'une des deux pistes de roulement de corps pendulaire et la première extrémité angulaire de l'autre des deux pistes de roulement de corps pendulaire ; Ainsi, l'organe de liaison présente une distance circonférentielle entre les pistes de roulement de corps pendulaire minimale ; cette diminution de la longueur circonférentielle centrale , autrement dit ce rapprochement des organes de roulement, permet d'augmenter la longueur des pistes de roulement de corps pendulaire ce qui permet d'augmenter la capacité de filtration du corps pendulaire ; en outre, cette diminution de la taille centrale permet une augmentation de la longueur circonférentielle des première et deuxième zone de l'organe de liaison, ce qui facilite le positionnement de rivets plus nombreux et/ou plus gros sur ces dernières ;
La distance circonférentielle entre la première extrémité et la deuxième extrémité de l'unique organe de liaison est plus de trois fois supérieur à la distance circonférentielle entre les positions de repos de chacune des deux pistes de roulement de corps pendulaire ; Ainsi, l'organe de liaison présente une distance circonférentielle entre les pistes de roulement de corps pendulaire minimale ; cette diminution de la longueur circonférentielle de la troisième zone , autrement dit ce rapprochement des organes de roulement, permet d'augmenter la longueur des pistes de roulement de corps pendulaire ce qui permet d'augmenter la capacité de filtration du corps pendulaire ; en outre, cette diminution de la taille de la troisième zone permet une augmentation de la longueur circonférentielle des première et deuxième zone de l'organe de liaison, ce qui facilite le positionnement de rivets plus nombreux et/ou plus gros sur ces dernières ;
La distance circonférentielle entre la deuxième extrémité angulaire de l'une des deux pistes de roulement de corps pendulaire et la première extrémité angulaire de l'autre des deux pistes de roulement de corps pendulaire est compris entre 1 et 10 millimètres (mm) ; cette distance permet de prendre en compte les contraintes de faisabilité liées aux éléments constituant le dispositif d'amortissement pendulaire et le positionnement des rivets ;
La distance circonférentielle entre la deuxième extrémité angulaire de l'une des deux pistes de roulement de corps pendulaire et la première extrémité angulaire de l'autre des deux pistes de roulement de corps pendulaire est compris entre 2 et 5 millimètres (mm) ; cette distance permet un optimum entre les contraintes de faisabilité liées aux éléments constituant le dispositif d'amortissement pendulaire et le positionnement des rivets ;
La distance circonférentielle entre les positions de repos de chacune des deux pistes de roulement de corps pendulaire est compris entre 2 et 11 millimètres (mm) ;
Le dispositif comprend en outre un système d'amortissement de butée directement porté par le corps pendulaire et permettant au moins d'amortir la venue en position de butée contre le support dudit corps pendulaire lors de la chute radiale et/ou de la saturation de ce dernier ;
le système d'amortissement de butée comprend au moins une patte de fixation s'étendant radialement dans un jeu axial ménagé entre au moins une des masses oscillantes et l'unique organe de liaison ; cette patte de fixation permet d'absorber les chocs axiaux entre l'organe de liaison et la masse oscillante et elle permet d'améliorer la fixation du système d'amortissement de butée au corps pendulaire tout en optimisant l'encombrement de celui-ci ;
l'au moins une patte de fixation est située au niveau de la troisième zone de l'unique organe de liaison ; ainsi, les contraintes dans le système d'amortissement de butée sont réduites et la durée de vie dudit système est augmentée.

L'invention a encore pour objet un composant pour système de transmission d'un véhicule, le composant étant notamment un double volant amortisseur, un convertisseur de couple hydrodynamique un volant solidaire du vilebrequin ou un disque de friction d'embrayage à sec ou humide, comprenant un dispositif d'amortissement pendulaire selon l'invention.

L'invention a enfin pour objet, selon un autre de ses aspects, un groupe motopropulseur de véhicule comprenant : un moteur thermique, électrique ou hybride de propulsion du véhicule, et un composant pour système de transmission selon l'invention.

D'autres caractéristiques et avantages de l'invention apparaîtront encore à la lecture de la description qui va suivre et à l'examen du dessin annexé dans lequel :
[Fig. 1] représente une vue partielle coupée de face d'un dispositif d'amortissement pendulaire selon l'invention en position de repos,
[Fig. 2] est identique à la figure 1 selon une première variante de l'invention,
[Fig. 3] est identique à la figure 1 selon une deuxième variante de l'invention.

Sur les différentes figures, des références identiques sont utilisées pour désigner des organes identiques ou analogues.

Sauf indication contraire, « axialement » signifie « parallèlement à l'axe X de rotation du support » ; « radialement » signifie « selon un axe transversal coupant l'axe de rotation du support » ; « angulairement » ou « circonférentiellement » signifient « autour de l'axe de rotation du support ».

L'épaisseur est mesurée selon l'axe X de rotation.

Par « appui centrifuge », on entend une force d'appui comportant une composante orientée à l'écart de l'axe X de rotation.

Par « véhicule», on entend les véhicules automobiles, qui comprennent non seulement les véhicules passagers mais également les véhicules industriels, ce qui comprend notamment les poids lourds, les véhicules de transport en commun ou les véhicules agricoles, mais également tout engin de transport permettant de faire passer d'un point à un autre un être vivant et/ou un objet.

Par « corps pendulaire », on entend une masse oscillante qui est montée de manière à osciller sur le support en réponse aux acyclismes du moteur du véhicule. Un corps pendulaire est classiquement constitué par une paire de masses oscillantes, ou « masses pendulaires », s'étendant de manière à prendre en sandwich le support et rigidement solidaires entre elles. Un corps pendulaire comprend en outre au moins un organe de liaison, encore appelé entretoise, adapté pour appairer entre elles la paire de masses oscillantes. Un corps pendulaire peut être également constitué par une masse oscillante unique. La masse oscillante unique peut être prise en sandwich entre deux supports.

Deux pièces sont dites « rigidement solidaires » ou « appariées » lorsqu'elles sont en permanence immobilisées l'une par rapport à l'autre. Cette immobilisation peut résulter d'une fixation de la première pièce sur la deuxième pièce directement ou par l'intermédiaire d'une ou plusieurs pièces intermédiaires.

La position de repos du dispositif est celle dans laquelle les corps pendulaires sont soumis à une force centrifuge, mais non à des oscillations de torsion provenant des acyclismes du moteur.

Les corps pendulaires sont dits « supportés par la force centrifuge » lorsque la vitesse de rotation du support est suffisante pour maintenir les corps pendulaires plaqués radialement vers l'extérieur contre les organes de roulement, et par leur intermédiaire contre le support.

Sauf indication contraire, les verbes « comporter », « présenter » ou « comprendre » doivent être interprétés de manière large, c'est-à-dire non limitative. Comme représenté sur les figures, un dispositif 10 d'amortissement pendulaire, notamment apte à équiper un système de transmission de véhicule automobile, est par exemple intégré à un composant d'un tel système de transmission, ce composant étant par exemple un double volant amortisseur.

Ce composant peut faire partie d'un groupe motopropulseur d'un véhicule automobile, ce dernier pouvant comprendre un moteur thermique ayant un nombre prédéterminé de cylindres, par exemple trois, quatre ou six cylindres.

Le dispositif 10 d'amortissement pendulaire comporte au moins un corps pendulaire 13 monté sur un support 12. Le dispositif 10 comprend de préférence une pluralité de corps pendulaires 13 montés sur le support 12. Chaque corps pendulaire comprend au moins une masse oscillante 14.

Dans les exemples représentés, chaque corps pendulaire comprend deux masses oscillantes 14 appariées au moyen d'au moins un organe de liaison communément appelé « entretoise » 20. Chaque corps pendulaire 13 comprend une unique entretoise.

Chaque entretoise 20 peut être rivetée aux masses oscillante 14 d'un même corps pendulaire 13 par des rivets.

Les rivets, comme représenté sur les figures, sont particulièrement adaptés pour solidariser entre eux des éléments et d'assurer une fixation optimale entre lesdits éléments.

L'unique entretoise 30 peut comprendre au moins un premier rivet 30. Le premier rivet 30 peut être plein ou semi-forêt.

Le premier rivet 30 peut s'étendre selon un axe longitudinal, parallèle à l'axe X de rotation, entre une tête 31 et un pied. Le premier rivet 30 peut s'étendre intégralement entre la tête 31 et le pied.

Le premier rivet 30 peut en outre comprendre un corps situé axialement, i.e. selon la direction longitudinale, entre la tête 31 et le pied. Le corps du premier rivet 30 peut être cylindrique. Le corps du premier rivet 30 peut présenter un premier diamètre D1. Le premier diamètre D1 peut être continu sur l'ensemble du corps du premier rivet 30.

Le corps du premier rivet 30 est adapté pour être introduit, avec ou sans jeu, dans un évidement pratiqué sur l'unique entretoise 20.

La tête 31 du premier rivet 30 peut être cylindrique. La tête 31 peut présenter un diamètre supérieur ou égale au premier diamètre D1. Le pied peut être adapté pour être déformé afin de finaliser la fixation d'au moins deux éléments d'un ensemble.

L'unique entretoise 30 peut en outre comprendre au moins un deuxième rivet 35. Le deuxième rivet 35 peut être identique au premier rivet 30 avec un corps de deuxième rivet 35 présentant un deuxième diamètre D2.

Chacune unique entretoise 20 peut comprendre un corps principal qui s'étend radialement et circonférentiellement, et est de forme générale arquée. Le corps principal s'étend radialement entre une face supérieure 21 radialement externe et une face inférieure 22 radialement interne. Le corps principal s'étend circonférentiellement entre une première extrémité 23 circonférentielle et une deuxième extrémité 24 circonférentielle.

Chacune des masses oscillantes 14 comprend un corps principal qui s'étend radialement et circonférentiellement, et est de forme générale arquée. Le corps principal s'étend radialement entre des bords radialement intérieurs 6i et radialement extérieurs 6e de masse oscillante 14. Le corps principal s'étend circonférentiellement entre une première extrémité circonférentielle 141 et une deuxième extrémité circonférentielle 142. Les masses oscillantes 14 sont situées de part et d'autre du support 12 et sont axialement en regard.

Le support 12 peut être un élément d'entrée de l'amortisseur de torsion, un élément de sortie ou un élément de phasage intermédiaire disposé entre deux séries de ressort de l'amortisseur, ou un élément lié en rotation à un des éléments précités et distinct de ces derniers, étant alors par exemple un support propre au dispositif 10.

Le support 12 du dispositif 10 d'amortissement pendulaire peut alors être l'un parmi une rondelle de guidage du composant, une rondelle de phasage du composant, un voile, ou un support distinct dudit voile, de ladite rondelle de guidage et de ladite rondelle de phasage.

Dans le cas où le dispositif est intégré à un volant solidaire du vilebrequin, le support peut être solidaire de ce volant.

Le support 12 peut encore être autre, tel qu'un flasque.

Dans l'exemple considéré, le support 12 présente globalement une forme d'anneau constitué par une tôle métallique découpée, généralement en acier, d'une épaisseur typiquement inférieure à 10 mm (millimètres), de préférence inférieure à 9 mm, de préférence inférieure à 8 mm.

Le support 12 s'étend axialement entre deux faces latérales 16 opposées. Les deux faces latérales 16 peuvent être planes. Les deux faces latérales 16 peuvent s'étendre entre un bord radialement intérieur et un bord radialement extérieur. Le bord radialement intérieur peut être classiquement de forme circulaire.

Au moins une fenêtre 15 traverse le support 12 suivant son épaisseur. De préférence, autant de fenêtres 15 que de corps pendulaire 13 traverse le support 12. Chacune des fenêtres 15 définit un espaces vide à l'intérieur du support 12. Les fenêtres 15 peuvent être régulièrement réparties sur toute la circonférence du support 12. Chaque entretoise 20 peut traverser une fenêtre 15. Chaque entretoise 20 peut être intégralement reçu dans l'épaisseur de la fenêtre 15.

Le dispositif 10 comprend en outre au moins un premier organe de roulement 40a et au moins un deuxième organe de roulement 40b, chacun étant par exemple un rouleau. Chaque corps pendulaire 13 est classiquement monté oscillant sur le support 12. De préférence, chaque corps pendulaire 13 est monté oscillant sur le support 12 au moyen du premier et du deuxième organes de roulement 40a, 40b. Les deux organes de roulement 40a, 40b peuvent traverser une unique fenêtre 15 du support 12 et guident le mouvement de la ou des masses oscillantes 14 d'un corps pendulaire 13 par rapport au support 12.

Chacun des premiers et deuxième organes de roulement 40a, 40b peut rouler sur une piste de roulement de support 41, solidaire du support 12 lorsque le corps pendulaire 13 est supporté par la force centrifuge. Chacun des premiers et deuxième organes de roulement 40a, 40b peut rouler sur une piste de roulement de corps pendulaire 42, solidaire du corps pendulaire 13, lorsque le corps pendulaire 13 est supporté par la force centrifuge. Les bords des fenêtres 15, en particulier les parties radialement externes desdits bords, peuvent définir les pistes de roulement de support 41. L'entretoise 20, en particulier l'unique entretoise 20, peut former les pistes de roulement de corps pendulaire 42 pour les deux organes de roulement 40a, 40b présents dans une même fenêtre 15. Plus particulièrement, la face supérieure 21 radialement externe de l'entretoise 20 peut former les pistes de roulement de corps pendulaire 42.

La forme des pistes de roulement de support 41 et de corps pendulaire 42 peut être telle que chaque corps pendulaire 13 soit déplacé par rapport au support 12 à la fois : en translation autour d'un axe fictif parallèle à l'axe de rotation X du support 12 et, également en rotation autour du centre de gravité dudit corps pendulaire 13, un tel mouvement étant encore appelé « mouvement combiné » et divulgué par exemple dans la demande DE 10 2011 086 532.

En variante, la forme des pistes de roulement de support 41 et de corps pendulaire 42 précitées peut être telle que chaque corps pendulaire 13 soit uniquement déplacé par rapport au support 12 en translation autour d'un axe fictif parallèle à un axe X de rotation du support 12.

La piste de roulement de corps pendulaire 42 peut présenter une forme concave. C'est-à-dire que la courbure de la piste de roulement de corps pendulaire 42 peut être dans une direction opposée à la courbure de la piste de roulement de support 41.

Le premier organe de roulement 40a et le deuxième organe de roulement 40b peuvent chacun être monté librement dans une fenêtre 15 du support 12. Chacun des deux organes de roulement 40a, 40b peut présenter une surface de roulement 43, adaptée pour être au moins partiellement au contact d'une des pistes de roulement de support 41 et d'une des pistes de roulement de corps pendulaire 42. Chacun des premier et deuxième organes de roulement 40a, 40b peut être un cylindre de rayon constant. Chacun des premier et deuxième organes de roulement 40a, 40b peut être non traversant. Chacun des premier et deuxième organes de roulement 40a, 40b peut être traversant.

Chacun des premier et deuxième organes de roulement 40a, 40b peut être uniquement sollicité en compression entre une des pistes de roulement de corps pendulaire 42 et une des pistes de roulement de support 41. La piste de roulement de corps pendulaire 42 et la piste de roulement de support 41 coopérant avec un même organe de roulement peuvent être au moins en partie radialement en regard, c'est-à-dire qu'il existe des plans perpendiculaires à l'axe X de rotation dans lesquels ces pistes de roulement s'étendent toutes les deux.

Chacun des premier et deuxième organes de roulement 40a, 40b peut coopérer avec une des pistes de roulement de corps pendulaire 42 et avec une des pistes de roulement de support 41 uniquement via sa surface de roulement 43 extérieure.

On va maintenant décrire plus en détail une piste de roulement de corps pendulaire 42. La piste de roulement de corps pendulaire 42 s'étend entre une première extrémité angulaire P2 et une deuxième extrémité angulaire P2'. Ces deux extrémités angulaires correspondent aux positions extrêmes sur cette piste de l'organe de roulement coopérant avec cette piste de roulement. Ces positions extrêmes sont atteintes lorsque l'unique entretoise 20 vient en butée contre le support 12 lors d'un débattement maximal du corps pendulaire 13 depuis sa position de repos en cas de filtrage d'une oscillation de torsion. La position PO de la piste de roulement de corps pendulaire 42 correspond au point de contact de l'organe de roulement qui lui est associé sur cette piste de roulement de corps pendulaire 42 lorsque le corps pendulaire 13 est au repos.

Les deux pistes de roulement de corps pendulaire 42 d'une unique entretoise 20 peuvent être proche l'une de l'autre. Plus particulièrement, la deuxième extrémité angulaire P2' de l'une des deux pistes de roulement de corps pendulaire 42 peut être située entre 1 et 10 millimètres, de préférence entre 2 et 5 millimètres, de la première extrémité angulaire P2 de l'autre des deux pistes de roulement de corps pendulaire 42. Cette distance circonférentielle est mesurée entre les deux pistes de roulement de corps pendulaire 42. Cette distance circonférentielle est mesurée entre les extrémités angulaire les plus proches des deux pistes de roulement de corps pendulaire 42 d'une unique entretoise 20.

Les corps pendulaires 13 sont de préférence répartis équi-angulairement autour de l'axe X. De préférence, leur nombre est égal à deux. Leur nombre peut être inférieur à quatre. Tous les corps pendulaires 13 peuvent se succéder circonférentiellement. Le dispositif 10 peut ainsi comprendre une pluralité de plans perpendiculaires à l'axe X de rotation dans chacun desquels tous les corps pendulaires 13 sont disposés

Le corps d'une unique entretoise 20 peut comprendre trois zones. Le corps d'une unique entretoise 20 peut comprendre une première zone 25 s'étendant circonférentiellement entre la première extrémité 23 circonférentielle et la position de repos PO du premier organe de roulement 40a sur une des pistes de roulement de corps pendulaire 42 de l'unique entretoise 20. Le corps d'une unique entretoise 20 peut comprendre une deuxième zone 26 s'étendant circonférentiellement entre la position de repos PO du deuxième organe de roulement 40b sur l'autre des pistes de roulement de corps pendulaire 42 de l'unique entretoise 20 et la deuxième extrémité 24 circonférentielle. Le corps d'une unique entretoise 20 peut comprendre une troisième zone 27 s'étendant circonférentiellement entre la première zone 25 et la deuxième zone 26.

L'unique entretoise 20 peut comprendre N premier rivet 30. N peut être un entier naturel non nul. De préférence, l'unique entretoise 20 peut comprendre un nombre pair de premier rivet 30. Ainsi, N peut être égal à deux, quatre ou six. Les premier rivets 30 peuvent être situés sur la première zone 25 et la deuxième zone 26 de l'unique entretoise 20. De préférence, les premier rivets 30 peuvent être uniformément répartis entre la première zone 25 et la deuxième zone 26 de l'unique entretoise 20.

L'unique entretoise 20 peut comprendre R deuxième rivet 35. R peut être un entier naturel. L'unique entretoise 20 peut comprendre aucun deuxième rivet 35. Dans ces conditions, la troisième zone 27 peut ne comprendre aucun rivet, ni premier rivet, ni deuxième rivet. Le ou les deuxième rivets 35 peuvent être situés sur la troisième zone 27 de l'unique entretoise 20.

La somme des premiers diamètres D1 des N premier rivet 30 de la première zone 25 ou de la deuxième zone 26 est strictement supérieur à la somme des deuxièmes diamètres D2 des R deuxième rivet 35 de la troisième zone 27.

L'unique entretoise 20 peut comprendre un unique premier rivet 30 sur la première zone 25, aucun deuxième rivet 35 sur la troisième zone 27 et un unique premier rivet 30 sur la deuxième zone 26.

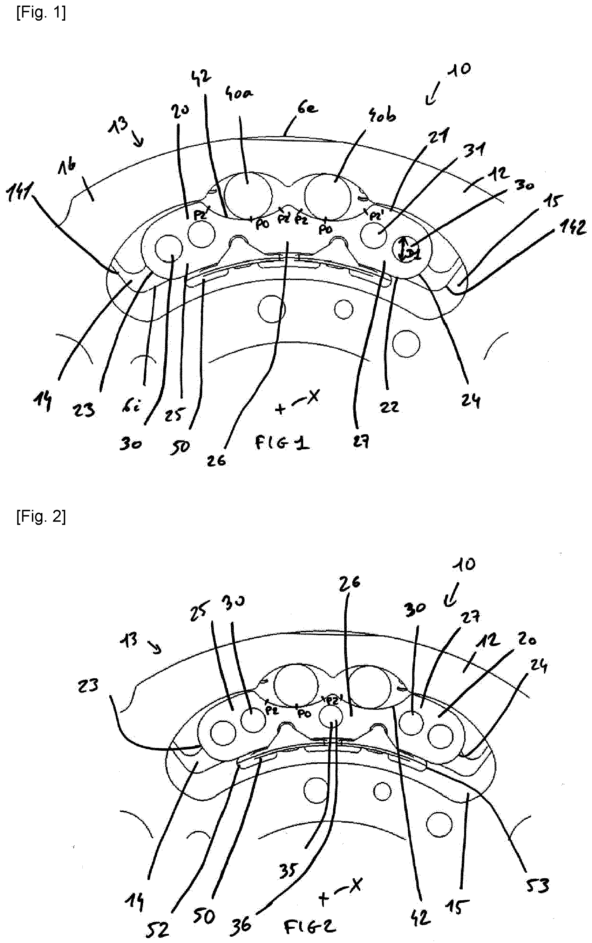

Alternativement, comme représenté sur la figure 1, l'unique entretoise 20 peut comprendre deux premier rivets 30 sur la première zone 25, aucun deuxième rivet 35 sur la troisième zone 27 et deux premier rivets 30 sur la deuxième zone 26.

Alternativement, comme représenté sur la figure 2, l'unique entretoise 20 peut comprendre deux premier rivets 30 sur la première zone 25, un unique deuxième rivet 35 sur la troisième zone 27 et deux premier rivets 30 sur la deuxième zone 26. Le premier diamètre D1 peut être supérieur ou égale au deuxième diamètre D2.

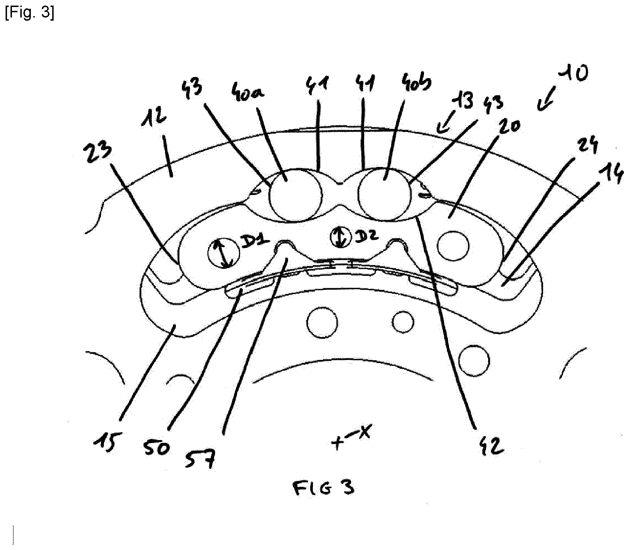

Alternativement, comme représenté sur la figure 3, l'unique entretoise 20 peut comprendre un unique premier rivets 30 sur la première zone 25, un unique deuxième rivet 35 sur la troisième zone 27 et un unique premier rivets 30 sur la deuxième zone 26. Le premier diamètre D1 peut être strictement supérieur au deuxième diamètre D2.

Ainsi, quand le nombre N est supérieur au nombre R, le premier diamètre D1 peut être supérieur ou égal au deuxième diamètre D2 et lorsque le nombre N est égale au nombre R, le premier diamètre D1 peut être strictement supérieur au deuxième diamètre D2. Le positionnement et le choix des rivets (premier ou deuxième rivets) est ainsi optimisé sur l'unique entretoise 20. Les rivets sont plus nombreux et/ou plus résistant (présentent un plus gros diamètre) sur les zones de l'unique entretoise 20 qui sont les plus sollicitées lors de la saturation du corps pendulaire 13. La tenue mécanique du dispositif 10 d'amortissement pendulaire est renforcée, et donc sa durée de vie est augmentée.

Le dispositif 10 comprend en outre un système d'amortissement de butée 50. Le dispositif 10 peut comprendre un unique système d'amortissement de butée 50. Le système d'amortissement de butée 50 peut être réalisé dans un matériau élastique. Le matériau élastique peut être un élastomère ou du caoutchouc. Les propriétés élastiques présentées par le système d'amortissement de butée 50 peuvent permettre l'amortissement des chocs liés à la venue en contact du corps pendulaire 13 et du support 12.

Une même pièce, à savoir le système d'amortissement de butée 50 précité, peut alors amortir toutes les positions de venue en butée contre le support 12 du corps pendulaire 13. Le système d'amortissement de butée 50 peut comprendre un corps et être disposé radialement sous l'unique entretoise 20. Le corps peut s'étendre circonférentiellement entre une première extrémité circonférentielle 52 et une deuxième extrémité circonférentielle 53. La distance entre la première extrémité circonférentielle 52 et la deuxième extrémité circonférentielle 53 du système d'amortissement de butée 50 peut être strictement inférieure à la distance circonférentielle entre la première extrémité 23 et la deuxième extrémité 24 circonférentielle de l'unique entretoise 20.

Le système d'amortissement de butée 50 peut être rigidement solidaire de l'unique entretoise 20. Le système d'amortissement de butée 50 peut être directement rigidement solidaire de l'unique entretoise 20. Alternativement, le système d'amortissement de butée 50 peut être rigidement solidaire de l'unique entretoise 20 par l'intermédiaire d'un tierce élément.

Le système d'amortissement de butée 50 peut comprendre au moins une patte de fixation 57. L'au moins une patte de fixation 57 est adaptée pour solidariser rigidement le système d'amortissement de butée 50 à l'entretoise 20. De préférence, le système d'amortissement de butée 50 peut comprendre une paire de pattes de fixation 57. De préférence, le système d'amortissement de butée 50 peut comprendre deux paire de pattes de fixation 57. Les pattes de fixation 57 d'une paire de pattes de fixation 57 sont opposées axialement deux à deux.

Lorsque le système d'amortissement de butée 50 comprend une unique patte de fixation 57, celle-ci peut être solidaire de la troisième zone 27 de l'entretoise 20.

Lorsque le système d'amortissement de butée 50 comprend une paire de pattes de fixation 57, lesdites pattes de fixation 57 peuvent être symétriques entre elles par rapport à un plan perpendiculaire à l'axe X de rotation. La paire de pattes de fixation 57 peut être solidaire de la troisième zone 27 de l'entretoise 20.

Lorsque le système d'amortissement de butée 50 comprend deux paires de pattes de fixation 57, les deux paires de pattes de fixation 57 sont symétriques entre elles par rapport à un plan parallèle à l'axe de rotation et chacune des pattes de fixation 57 d'une paire est symétrique à l'autre des pattes de fixation 57 d'une même paire par rapport à un plan perpendiculaire à l'axe X de rotation.

Bien entendu, l'invention n'est pas limitée aux variantes de réalisation particulières décrites ci-dessus. En particulier, des combinaisons des différentes alternatives de réalisation décrites ci-dessus sont possibles.

## Revendications

1. Dispositif (10) d'amortissement pendulaire destiné à être intégré dans une chaîne de transmission d'un véhicule, notamment dans un embrayage, comprenant :
a. un support (12) mobile en rotation autour d'un axe (X) de rotation, et dans lequel une fenêtre (15) définissant deux pistes de roulement de support (41) est ménagée,
b. un corps pendulaire (13) comprenant :
i. deux masses oscillantes (14), et
ii. un unique organe de liaison (20) appariant entre elles les deux masses oscillantes (14) et définissant deux pistes de roulement de corps pendulaire (42),
c. un premier et un deuxième organes de roulement (40a, 40b) définissant chacun une surface de roulement (43) adaptée pour rouler sur l'une, respectivement l'autre, des deux pistes de roulement de support et de corps pendulaire, de manière à guider une oscillation du corps pendulaire (13) par rapport au support (12), le premier et le deuxième organes de roulement (40a, 40b) roulant le long de chaque piste de roulement (41, 42) autour d'une position de repos (P0) sur ladite piste,
dans lequel l'unique organe de liaison (20) s'étend circonférentiellement entre une première extrémité (23) et une deuxième extrémité (24) et comprend une première zone (25), s'étendant circonférentiellement entre la première extrémité (23) et la position de repos du premier organe de roulement (40a), une deuxième zone (26), s'étendant circonférentiellement entre la position de repos du deuxième organe de roulement (40b) et la deuxième extrémité (24), et une troisième zone (27), s'étendant circonférentiellement entre la première zone et la deuxième zone, et où l'unique organe de liaison (20) est riveté, la première zone (25) et la deuxième zone (26) comprenant chacune N premier rivet (30) présentant chacun un premier diamètre (D1), N étant un entier naturel non nul, et la troisième zone (27) comprenant R deuxième rivet (35) présentant chacun un deuxième diamètre (D2), R étant un entier naturel, caractérisé et en ce que la somme des premiers diamètres (D1) des N premier rivet de la première zone (25) ou de la deuxième zone (26) est strictement supérieur à la somme des deuxièmes diamètres (D2) des R deuxième rivet de la troisième zone (27).

2. Dispositif (10) selon la revendication 1, dans lequel N est strictement supérieur à R.

3. Dispositif (10) selon l'une quelconque des revendications précédentes, dans lequel N est égal à deux et R est égal à zéro.

4. Dispositif (10) selon la revendication 1 ou la revendication 2, dans lequel N est égal à deux et R est égal à un.

5. Dispositif (10) selon la revendication 1, dans lequel N est identique à R.

6. Dispositif (10) selon l'une quelconque des revendications 1 à 4, dans lequel le premier diamètre (D1) de chacun des N premier rivet (30) de la première zone (25) et de la deuxième zone (26) de l'unique organe de liaison (20) est identique au deuxième diamètre (D2) de chacun des R deuxième rivet de la troisième zone (27) de l'unique organe de liaison (20).

7. Dispositif (10) selon l'une quelconque des revendications 1 à 5, dans lequel le premier diamètre (D1) de chacun des N premier rivet (30) de la première zone (25) et de la deuxième zone (26) de l'unique organe de liaison (20) est strictement supérieur au deuxième diamètre (D2) de chacun des R deuxième rivet de la troisième zone (27) de l'unique organe de liaison (20).

8. Dispositif (10) selon l'une quelconque des revendications précédentes, dans lequel chacune des deux piste de roulement de corps pendulaire (42) de l'unique organe de liaison (20) s'étend entre une première extrémité angulaire (P2) et une deuxième extrémité angulaire (P2'), la distance circonférentielle entre la première extrémité (23) et la deuxième extrémité (24) de l'unique organe de liaison (20) étant plus de trois fois supérieur à la distance circonférentielle entre la deuxième extrémité angulaire (P2') de l'une des deux pistes de roulement de corps pendulaire (42) et la première extrémité angulaire (P2) de l'autre des deux pistes de roulement de corps pendulaire (42).

9. Dispositif (10) selon la revendication précédente, dans lequel la distance circonférentielle entre la deuxième extrémité angulaire (P2') de l'une des deux pistes de roulement de corps pendulaire (42) et la première extrémité angulaire (P2) de l'autre des deux pistes de roulement de corps pendulaire (42) est compris entre 1 et 10 millimètres (mm), de préférence entre 2 et 5 millimètres.

10. Composant pour système de transmission d'un véhicule, le composant étant notamment un double volant amortisseur, un convertisseur de couple hydrodynamique, un volant solidaire du vilebrequin ou un disque de friction d'embrayage à sec ou humide, comprenant un dispositif (10) d'amortissement pendulaire selon l'une quelconque des revendications précédentes.

## Patentansprüche

1. Pendeldämpfungsvorrichtung (10), die dazu bestimmt ist, in einen Antriebsstrang eines Fahrzeugs, insbesondere in eine Kupplung, eingebaut zu werden, umfassend:
a. einen Träger (12), der um eine Drehachse (X) drehbeweglich ist und in dem ein Fenster, das zwei Trägerwälzbahnen (41) definiert, ausgebildet ist,
b. einen Pendelkörper (13), umfassend:
i. zwei oszillierende Massen (14) und
ii. ein einziges Verbindungsorgan (20), das die beiden oszillierenden Massen (14) untereinander zu einem Paar verbindet und zwei Pendelkörperwälzbahnen (42) definiert,
c. ein erstes und ein zweites Wälzorgan (40a, 40b), die jeweils eine Wälzfläche (43) definieren, die geeignet ist, sich auf der einen beziehungsweise der anderen der beiden Träger- und Pendelkörperwälzbahnen abzuwälzen, so dass eine Oszillation des Pendelkörpers (13) in Bezug auf den Träger (12) geführt wird, wobei sich das erste und das zweite Wälzorgan (40a, 40b) entlang jeder Wälzbahn (41, 42) um eine Ruheposition (PO) auf der Bahn abwälzen, wobei sich das einzige Verbindungsorgan (20) in Umfangsrichtung zwischen einem ersten Ende (23) und einem zweiten Ende (24) erstreckt und einen ersten Bereich (25), der sich in Umfangsrichtung zwischen dem ersten Ende (23) und der Ruheposition des ersten Wälzorgans (40a), einen zweiten Bereich, der sich in Umfangsrichtung zwischen der Ruheposition des zweiten Wälzorgans (40b) und dem zweiten Ende (24) erstreckt, und einen dritten Bereich (27), der sich in Umfangsrichtung zwischen dem ersten Bereich und dem zweiten Bereich erstreckt, umfasst, und wobei das einzige Verbindungsorgan (20) genietet ist, wobei der erste Bereich (25) und der zweite Bereich (26) jeweils N erste Niete (30) umfassen, die jeweils einen ersten Durchmesser (D1) aufweisen, wobei N eine natürliche ganze Zahl ungleich null ist, und wobei der dritte Bereich (27) R zweite Niete (35) umfasst, die jeweils einen zweiten Durchmesser (D2) aufweisen, wobei R eine natürliche ganze Zahl ist,
**dadurch gekennzeichnet, dass** die Summe der ersten Durchmesser (D1) der N ersten Niete des ersten Bereichs (25) oder des zweiten Bereichs (26) größer als die Summe der zweiten Durchmesser (D2) der R zweiten Niete des dritten Bereichs (27) ist.

2. Vorrichtung (10) nach Anspruch 1, wobei N größer als R ist.

3. Vorrichtung (10) nach einem der vorhergehenden Ansprüche, wobei N gleich zwei ist und R gleich null ist.

4. Vorrichtung (10) nach Anspruch 1 oder Anspruch 2, wobei N gleich zwei ist und R gleich eins ist.

5. Vorrichtung (10) nach Anspruch 1, wobei N identisch mit R ist.

6. Vorrichtung (10) nach einem der Ansprüche 1 bis 4, wobei der erste Durchmesser (D1) jedes der N ersten Niete (30) des ersten Bereichs (25) und des zweiten Bereichs (26) des einzigen Verbindungsorgans (20) identisch mit dem zweiten Durchmesser (D2) jedes der R zweiten Niete des dritten Bereichs (27) des einzigen Verbindungsorgans (20) ist.

7. Vorrichtung (10) nach einem der Ansprüche 1 bis 5, wobei der erste Durchmesser (D1) jedes der N ersten Niete (30) des ersten Bereichs (25) und des zweiten Bereichs (26) des einzigen Verbindungsorgans (20) größer als der zweite Durchmesser (D2) jedes der R zweiten Niete des dritten Bereichs (27) des einzigen Verbindungsorgans (20) ist.

8. Vorrichtung (10) nach einem der vorhergehenden Ansprüche, wobei sich jede der beiden Pendelkörperwälzbahnen (42) des einzigen Verbindungsorgans (20) zwischen einem ersten winkelförmigen Ende (P2) und einem zweiten winkelförmigen Ende (P2') erstreckt, wobei der Abstand in Umfangsrichtung zwischen dem ersten Ende (23) und dem zweiten Ende (24) des einzigen Verbindungsorgans (20) mehr als dreimal so groß wie der Abstand in Umfangsrichtung zwischen dem zweiten winkelförmigen Ende (P2') der einen der beiden Pendelkörperwälzbahnen (42) und dem ersten winkelförmigen Ende (P2) der anderen der beiden Pendelkörperwälzbahnen (42) ist.

9. Vorrichtung (10) nach dem vorhergehenden Anspruch, wobei der Abstand in Umfangsrichtung zwischen dem zweiten winkelförmigen Ende (P2') der einen der beiden Pendelkörperwälzbahnen (42) und dem ersten winkelförmigen Ende (P2) der anderen der beiden Pendelkörperwälzbahnen (42) zwischen 1 und 10 Millimeter (mm), bevorzugt zwischen 2 und 5 Millimeter beträgt.

10. Komponente für ein Antriebssystem eines Fahrzeugs, wobei die Komponente insbesondere ein Zweimassenschwungrad, ein hydrodynamischer Drehmomentwandler, ein mit der Kurbelwelle fest verbundenes Schwungrad oder eine Reibscheibe für eine trockenlaufende oder nasslaufende Kupplung mit einer Pendeldämpfungsvorrichtung (19) nach einem der vorhergehenden Ansprüche ist.

## Claims

1. Pendulum damping device (10) intended to be incorporated into a drivetrain of a vehicle, notably into a clutch, comprising:
a. a support (12) which is rotatable about an axis (X) of rotation and in which is made an aperture (15) defining two support runway tracks (41),
b. a pendulum assembly (13) comprising:
i. two oscillating masses (14) and
ii.a single connecting member (20) pairing the two oscillating masses (14) with one another and defining two pendulum-assembly runway tracks (42),
c. a first and a second rolling member (40a, 40b), each of which defines a rolling surface (43) designed for rolling on one, respectively the other, of the two support runway tracks and pendulum-assembly runway tracks so as to guide the oscillation of the pendulum assembly (13) with respect to the support (12), the first and the second rolling members (40a, 40b) rolling along each runway track (41, 42) around a rest position (P0) on said track,
wherein the single connecting member (20) extends circumferentially between a first end (23) and a second end (24) and comprises a first zone (25), extending circumferentially between the first end (23) and the rest position of the first rolling member (40a), a second zone (26), extending circumferentially between the rest position of the second rolling member (40b) and the second end (24), and a third zone (27), extending circumferentially between the first zone and the second zone, **characterized in that** the single connecting member (20) is riveted, the first zone (25) and the second zone (26) each comprising N first rivets (30) each having a first diameter (D1), N being a non-zero natural integer, and the third zone (27) comprising R second rivets (35) each having a second diameter (D2), R being a natural integer,
and **in that** the sum of the first diameters (D1) of the N first rivets of the first zone (25) or of the second zone (26) is strictly greater than the sum of the second diameters (D2) of the R second rivets of the third zone (27).

2. Device (10) according to Claim 1, wherein N is strictly greater than R.

3. Device (10) according to either one of the preceding claims, wherein N is equal to two and R is equal to zero.

4. Device (10) according to Claim 1 or Claim 2, wherein N is equal to two and R is equal to one.

5. Device (10) according to Claim 1, wherein N is the same as R.

6. Device (10) according to any one of Claims 1 to 4, wherein the first diameter (D1) of each of the N first rivets (30) of the first zone (25) and of the second zone (26) of the single connecting member (20) is identical to the second diameter (D2) of each of the R second rivets of the third zone (27) of the single connecting member (20).

7. Device (10) according to any one of Claims 1 to 5, wherein the first diameter (D1) of each of the N first rivets (30) of the first zone (25) and of the second zone (26) of the single connecting member (20) is strictly greater than the second diameter (D2) of each of the R second rivets of the third zone (27) of the single connecting member (20).

8. Device (10) according to any one of the preceding claims, wherein each of the two pendulum-assembly runway tracks (42) of the single connecting member (20) extends between a first angular end (P2) and a second angular end (P2'), the circumferential distance between the first end (23) and the second end (24) of the single connecting member (20) being more than three times greater than the circumferential distance between the second angular end (P2') of one of the two pendulum-assembly runway tracks (42) and the first angular end (P2) of the other of the two pendulum-assembly runway tracks (42).

9. Device (10) according to the preceding claim, wherein the circumferential distance between the second angular end (P2') of one of the two pendulum-assembly runway tracks (42) and the first angular end (P2) of the other of the two pendulum-assembly runway tracks (42) is between 1 and 10 millimetres (mm), preferably between 2 and 5 millimetres.

10. Component for a vehicle transmission system, the component notably being a dual mass flywheel, a hydrodynamic torque converter, a flywheel secured to the crankshaft or a friction disc of a wet or dry clutch, comprising a pendulum damping device (10) according to any one of the preceding claims.
